# EUROPÄISCHE PATENTANMELDUNG

(11) **EP 1 959 174 A2**
(43) Veröffentlichungstag der Anmeldung: **20.08.2008**
(21) Anmeldenummer: 08002807.9
(22) Anmeldetag: 15.02.2008
(51) Int. Cl.: F16J 15/32, F16C 29/08

(54) **Längsdichtung für eine Linearführung**

(30) Priorität: 15.02.2007 DE 102007008052
(71) Anmelder: Neo-plastic Dr. Doetsch Diespeck GmbH, 91456 Diespeck (DE)
(72) Erfinder: Freiherr von und zu Franckenstein, Hubertus, 91085 Weisendorf (DE); Beck, Günter, 91413 Neustadt/Aisch (DE)
(74) Vertreter: Tergau & Pohl Patentanwälte

(57) **Zusammenfassung**

Es wird eine verbesserte Längsdichtung (1) für eine Linearführung angegeben. Die Längsdichtung (1) umfasst einen langgestreckten Träger (2) aus einem vergleichsweise harten Kunststoff und eine langgestreckte Dichtlippe (3) aus einem vergleichsweise weichen Kunststoff. Die Dichtlippe (3) ist dabei entlang einer Grenzfläche (7) an den Träger (2) derart angespritzt, dass die Dichtlippe (3) und der Träger (2) durch mindestens eine geschlossene Materialverschlaufung (14) formschlüssig miteinander verbunden sind.

## Beschreibung

Die Erfindung bezieht sich auf eine Längsdichtung für eine Linearführung.

Linearführungen dienen zur möglichst reibungsarmen Führung eines beweglichen Teils, insbesondere Maschinenteils, gegenüber einem feststehenden Teil auf einer zumindest im Wesentlichen linearen Bahn. Eine Linearführung umfasst herkömmücherweise eine in der Regel dem feststehenden Teil zugeordnete Führungsschiene, auf der ein dem beweglichen Teil zugeordneter Laufwagen verschiebbar ist. Man unterscheidet hierbei gleitgelagerte und wälzgelagerte Linear-führungen, wobei bei letzteren dem Laufwagen und der Führungsschiene Wälzkörper in Form von Kugeln, Rollen oder dergleichen zwischengeordnet sind.

Um einen dauerhaft reibungsarmen Lauf einer Linearführung sicherzustellen, muss nach Möglichkeit verhindert werden, dass von außen Verunreinigung in den Lagerbereich zwischen dem Laufwagen und der Führungsschiene eindringt. Andererseits muss nach Möglichkeit verhindert werden, dass Schmiermittel aus dem Lagerbereich nach außen dringt. Zu diesem Zweck ist ein Laufwagen einer Linearführung üblicherweise mit Dichtungen versehen, die den zwischen dem Laufwagen und der Führungsschiene gebildeten Spalt nach außen hin abdichten. Diese Dichtungen umfassen neben stirnseitig angeordneten Abstreifern so genannte Längsdichtungen, die am Rand einer die Führungsschiene umfassenden Führungsnut des Laufwagens befestigt sind und von dort aus in den Spalt hineinragen.

Zur Halterung der Längsdichtung ist ein Laufwagen üblicherweise mit einer Aufnahme versehen, in der die Längsdichtung im Bereich eines Rückens montiert wird. Als Rücken ist hierbei die zu der eigentlichen Dichtlippe entgegengesetzte Kante der Längsdichtung bezeichnet. Im Sinne einer einfachen Montage und Austauschbarkeit der Längsdichtung ist diese häufig mittels einer Schnapp- oder Rastverbindung in der korrespondierenden Aufnahme des Laufwagens fixiert. Problematisch in diesem Zusammenhang ist, dass eine Längsdichtung einerseits möglichst weich und flexibel sein muss, um den Spalt effektiv abzudichten, ohne im Betrieb der Linearführung einen zu großen Reibwiderstand zu verursachen, dass aber andererseits die Längsdichtung hinreichend hart sein muss, um in der Aufnahme des Laufwagens und der hier gegebenenfalls vorgesehenen Verrastung einen sicheren Halt zu finden. Kunststoff-, insbesondere Elastomerdichtungen mit homogener Materialzusammensetzung sind im Hinblick auf mindestens eine dieser widerstrebenden Anforderungen in der Regel ungeeignet. Solche Dichtungen sind also entweder zu hart und verursachen somit einen zu hohen Reibwiderstand oder erzielen eine nur unzureichende Dichtwirkung, oder sie sind zu weich und lassen sich dann nicht hinreichend sicher am Laufwagen fixieren.

Um den oben genannten gegensätzlichen Anforderungen gerecht zu werden, werden Längsdichtungen für Linearführungen herkömmlicherweise mit einem Metallinlet gefertigt, das mit einem Elastomermaterial umspritzt wird. Das Metallinlet erstreckt sich hierbei nur über einen von der Dichtlippe beabstandeten Bereich der Längsdichtung und verstärkt somit deren Rücken. Die Herstellung solcher Längsdichtungen mit Metallinlet ist aber vergleichsweise kostenintensiv.

Bisweilen werden Längsdichtungen alternativ auch als Zweikomponenten-Kunststoffteil gefertigt, wobei ein dem Rücken der Dichtung entsprechender Träger aus einem härteren Kunststoff hergestellt ist, und wobei diesem Träger eine Dichtlippe aus einem vergleichsweise flexiblen Elastomermaterial vorgesetzt ist. Hierbei hat es sich aber - insbesondere aufgrund der extrem kleinen Bauhöhe gängiger Längsdichtungen - als problematisch herausgestellt, einen hinreichenden Verbund zwischen dem Träger und der Dichtlippe herzustellen.

Der Erfindung liegt die Aufgabe zugrunde, eine vor diesem Hintergrund verbesserte Längsdichtung für eine Linearführung anzugeben.

Diese Aufgabe wird erfindungsgemäß gelöst durch die Merkmale des Anspruchs 1. Danach umfasst die Längsdichtung einen langgestreckten Träger aus einem vergleichsweise harten Kunststoff sowie eine ebenfalls langgestreckte Dichtlippe aus einem vergleichsweise weichen Kunststoff, wobei die Dichtlippe entlang einer Grenzfläche an den Träger angespritzt ist. Erfindungsgemäß ist hierbei die Dichtlippe derart an den Träger angeformt, insbesondere angespritzt, dass die Dichtlippe und der Träger durch mindestens eine geschlossene Materialverschlaufung formschlüssig miteinander verbunden sind.

Als geschlossene Materialverschlaufung der Dichtlippe mit dem Träger wird allgemein eine Gestaltung der zwischen diesen beiden Teilen bestehenden Grenzfläche bezeichnet, bei der mindestens ein Materialabschnitt des einen Teils formschlüssig in das andere Teil eingreift, wobei dieser Materialabschnitt nach Art einer Brücke oder Schlaufe an mindestens zwei voneinander beabstandeten Stellen einstückig mit dem einen Teil verbunden ist und einen Materialabschnitt des anderen Teils umschlingt, so dass die beiden Teile nicht voneinander getrennt werden können, ohne das Material mindestens eines der Teile an mindestens einer Stelle zu zerreißen. Mit anderen Worten wird die geschlossene Materialverschlaufung also durch zwei untrennbar eineinander durchschlingende, jeweils geschlossene Materialschlaufen des einen Teils bzw. des anderen Teils gebildet.

Aus der letztgenannten Eigenschaft der geschlossenen Materialverschlaufung resultiert bei der erfindungsgemäßen Längsdichtung ein besonders stabiler Zusammenhalt der Dichtlippe und des Trägers. Dieser Zusammenhalt ermöglicht es, eine hinreichend belastbare Längsdichtung als Zweikomponenten-Kunststoffteil zu fertigen, wodurch zu vergleichsweise geringen Herstellungskosten eine Längsdichtung realisierbar ist, die den oben genannten einander widerstrebenden Materialanforderungen genügt. Die erfindungsgemäße Längsdichtung ist nämlich einerseits im Rücken hinreichend stabil, um sicher an einem Laufwagen befestigt zu werden, andererseits im Bereich der Dichtlippe aber hinreichend flexibel, um bei effektiver Dichtwirkung einen nur geringen Reibwiderstand zu erzeugen. Das erfindungsgemäß Konstruktionsprinzip ist dabei insbesondere vorteilhaft zur Realisierung besonders flacher Längsdichtungen, d.h. Längsdichtungen mit besonders geringer Bauhöhe, einsetzbar. In bevorzugter Ausführung beträgt die Bauhöhe der Längsdichtung weniger als 1,8 mm, insbesondere zwischen 1,7 mm und 1,25 mm.

In bevorzugter Ausbildung der Längsdichtung sind eine Mehrzahl solcher Materialverschlaufungen vorgesehen, die in Längsrichtung des Trägers und der Dichtlippe insbesondere regelmäßig zueinander beabstandet angeordnet sind.

Um eine möglichst großflächige Grenzfläche zwischen dem Träger und der Dichtlippe zu erzielen und hierdurch den Zusammenhalt dieser beiden Teile zu verbessern, hat die Grenzfläche vorteilhafterweise eine im Querschnitt abgestufte Kontur, so dass sich der Träger und die Dichtlippe in einem Überlappungsbereich gegenseitig überlappen.

Ebenfalls zur Verbesserung des Zusammenhalts der Dichtlippe mit dem Träger ist in einer weiteren Fortbildung der Längsdichtung im Bereich der Grenzfläche im Träger mindestens eine Ausnehmung vorgesehen, die sich ausgehend von der Grenzfläche schwalbenschwanzartig aufweitet, wobei in diese Ausnehmung ein (erster) Haltevorsprung der Dichtlippe formschlüssig eingreift, so dass er das Material des Trägers hinterschneidet. Diese Ausnehmung bildet zusammen mit dem korrespondierenden Haltevorsprung bevorzugt einen Teil der oben beschriebenen Materialverschlaufung. Eine oder mehrere solcher Ausnehmungen und zugeordnete Haltevorsprünge können aber auch zusätzlich zu der Materialverschlaufung vorgesehen sein.

In einer zweckmäßigen Ausführung der Längsdichtung ist die oder jede Ausnehmung in Form einer konischen Bohrung ausgebildet, die im Überlappungsbereich angeordnet ist, und die sich ausgehend von der dortigen Grenzfläche in Richtung auf eine freie Oberfläche des Trägers erstreckt. Die Ausnehmung ist hierbei insbesondere nach Art einer Durchgangsbohrung ausgeführt und durchsetzt den Träger somit vollständig. Als Bohrung wird hierbei - unabhängig von dem Herstellungsprozess - eine Ausnehmung mit im Wesentlichen rundem Querschnitt bezeichnet. Als freie Oberfläche des Trägers wird allgemein der Teil der Oberfläche des Trägers bezeichnet, der nicht zu der oben eingeführten Grenzfläche gehört, der also nicht unmittelbar an die Dichtlippe anstößt.

Um die oben beschriebene Materialverschlaufung auf fertigungstechnisch einfache und effektive Weise zu realisieren, ist ein von der Grenzfläche abgewandtes Ende der Ausnehmung vorzugsweise mit einem in den Träger eingebrachten Kanal verbunden, wobei das andere Ende dieses Kanals mit Abstand zu der Ausnehmung wiederum an der Grenzfläche mündet. In diesen Kanal greift hierbei ein zweiter Haltevorsprung der Dichtlippe ein, der endseitig mit dem vorstehend beschriebenen ersten Haltevorsprung einstückig zu einer geschlossenen Schlaufe verbunden ist. In einer aus fertigungstechnischen Gründen besonders vorteilhaften Ausführung ist dieser Kanal als Nut ausgebildet und somit zu einer freien Oberfläche des Trägers hin offen.

Bevorzugt sind der Träger und die Dichtlippe derart ausgebildet, dass die aus dem ersten Haltevorsprung und dem zweiten Haltevorsprung gebildete Schlaufe im Querschnitt durch die Längsdichtung eine etwa V-förmige Kontur aufweist. Diese Formgebung hat sich unter dem Gesichtspunkt einer möglichst hohen Belastbarkeit als vorteilhaft erwiesen.

Zusätzlich zu dem Formschlussverbund, der durch die Materialverschlaufungen und die gegebenenfalls vorgesehene Hinterschneidung des Trägermaterials erzielt wird, sind der Träger und die Dichtlippe entlang der Grenzfläche bevorzugt auch stoffschlüssig miteinander verbunden, um den Zusammenhalt der Dichtlippe und des Trägers weiter zu verbessern.

Als vorteilhaftes Material für die Dichtlippe wird bevorzugt ein thermoplastisches Elastomer verwendet. Als Material für den Träger wird dagegen bevorzugt Polyamid (PA) oder Polyoxymethylen (POM) herangezogen, wobei das Trägermaterial je nach den im Einzelfall bestehenden Anforderungen unverstärkt oder mit Fasern und/oder Kugeln verstärkt verwendet wird. Die Längsdichtung ist insbesondere ein Zweikomponenten-Spritzgussteil, wird also bevorzugt in einem Zweikomponenten-Spritzgussverfahren hergestellt.

Nachfolgend werden Ausführungsbeispiele der Erfindung anhand einer Zeichnung näher erläutert. Darin zeigen:
- Fig. 1: in perspektivischer ausschnitthafter Draufsicht eine Längsdichtung für eine Linearführung mit einem Träger und einer Dichtlippe,
- Fig. 2: in Seitenansicht die Längsdichtung gemäß Fig. 1,
- Fig. 3: in einer perspektivischen transparenten Ansicht einen vergrößerten Ausschnitt der Längsdichtung gemäß Fig. 1 mit einer Detailansicht einer Materialverschlaufung zwischen dem Träger und der Dichtlippe,
- Fig. 4: in Darstellung gemäß Fig. 1 eine alternative Ausführungsform der (hier transparent dargestellten) Längsdichtung, und
- Fig. 5: in einer Seitenansicht in Blickrichtung V gemäß Fig. 4 die dortige Längsdichtung.

Einander entsprechende Teile sind in allen Figuren stets mit gleichen Bezugszeichen versehen.

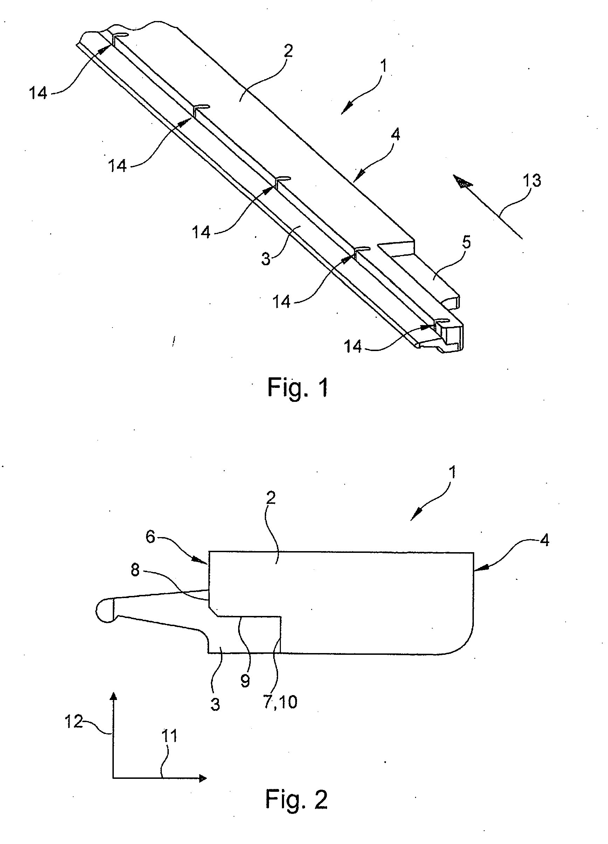

Die Fig. 1 bis 3 zeigen in unterschiedlicher Darstellung einer Längsdichtung 1 für eine Linearführung.

Die Längsdichtung 1 ist z.B. als Zweikomponenten-Spritzgussteil hergestellt und umfasst einen Träger 2 aus einem vergleichsweise harten Kunststoffmaterial, insbesondere PA, sowie eine an diesen angespritzte Dichtlippe 3 aus einem vergleichsweise weichen und flexiblen Elastomermaterial.

Der Träger 2 hat eine flache langgestreckte Form und bildet an der von der Dichtlippe 3 abgewandten Seitenfläche einen Rücken 4 der Längsdichtung 1, mit welchem diese in eine Aufnahme an einem (nicht dargestellten) Laufwagen der Linearführung einschiebbar ist. An beiden Längsenden des Trägers 2 ist eine Rastkontur 5 ausgebildet, die mit entsprechenden Rastmitteln in der Aufnahme des Laufwagens zusammenwirkt, um die Längsdichtung an dem Laufwagen zu fixieren.

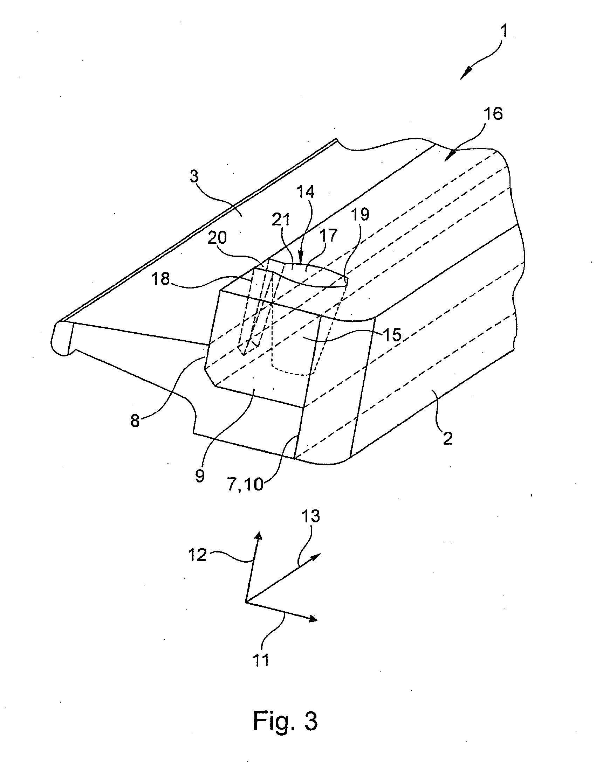

Die Dichtlippe 3 ist an eine von dem Rücken 4 abgewandte Vorderseite 6 (Fig. 2) des Trägers 2 angespritzt. Zwischen dem Träger 2 und der Dichtlippe 3 ist dabei eine Grenzfläche 7 (Fig. 2 und 3) gebildet, an der beide Teile, nämlich der Träger 2 und die Dichtlippe 3 unmittelbar zusammenstoßen.

Um die Grenzfläche 7 möglichst großflächig zu gestalten, hat die Grenzfläche 7 im Querschnitt gemäß Fig. 2 eine abgestufte Kontur. Im Rahmen dieser Kontur weist die Grenzfläche 7 einen mit der Vorderseite 6 fluchtenden ersten vertikalen Abschnitt 8 auf, der über einen horizontalen Abschnitt 9 in einen in Richtung auf den Rücken 4 zurückversetzten zweiten vertikalen Abschnitt 10 übergeht. Der horizontale Abschnitt 8 definiert einen Überlappungsbereich, indem sich der Träger 2 und die Dichtlippe 3 überlappen.

Die Begriffe horizontal und vertikal orientieren sich hierbei an der Darstellung gemäß Fig. 2. Eine Horizontalrichtung 11 ist somit durch die längere Querschnittsachse der Längsdichtung 1 definiert, während eine Vertikalrichtung 12 durch die kürzere Querschnittsachse (oder Bauhöhe) definiert ist. Die auf die Querschnittsfläche wiederum senkrechte Richtung ist nachfolgend als Längsrichtung 13 (Fig. 1 und 3) bezeichnet.

Der Träger 2 und die Dichtlippe 3 sind zum einen entlang der Grenzfläche 7 stoffschlüssig miteinander verbunden. Zu einem überwiegenden Teil wird der mechanische Zusammenhalt zwischen der Dichtlippe 3 und dem Träger 2 aber durch Formschlusseingriffe 14 des Dichtlippenmaterials in den Träger 2 hergestellt. Wie aus Fig. 1 zu entnehmen ist, sind mehrere dieser Formschlusseingriffe 14 in regelmäßigen Abständen über die Längserstreckung der Dichtlippe 1 verteilt angeordnet. Exemplarisch ist einer dieser Formschlusseingriffe 14 in der transparenten Detaildarstellung gemäß Fig. 3 näher dargestellt.

Wie aus dieser Darstellung ersichtlich, ist zur Ermöglichung eines jeden Formschlusseingriffes 14 in den Träger 2 eine Ausnehmung in Form einer Bohrung 15 eingebracht. Die Bohrung 15 öffnet sich zu dem horizontalen Abschnitt der Grenzfläche 7 hin mit vergleichsweise kleinem Durchmesser. Ausgehend von der Grenzfläche 7 erstreckt sich die Bohrung 15 im Wesentlichen in Vertikalrichtung 12 und weitet sich hierbei konisch auf. Die Bohrung 15 durchsetzt den Träger 2 vollständig und mündet somit an einer zu dem horizontalen Abschnitt 9 entgegengesetzten freien Oberfläche 16 des Trägers 2 in einer Öffnung 17.

In einem von der Grenzfläche 7 beabstandeten Bereich ist die Bohrung 15 mit einem Kanal 18 verbunden, der nach Art einer Nut in die Vorderseite 6 des Trägers 2 eingebracht ist, und der somit zu der Vorderseite 6 und der Oberfläche 16 hin offen ist. Der Kanal 18 mündet im Bereich des vertikalen Abschnitts 8, und somit insbesondere mit Abstand zur Mündung der Bohrung 15 wiederum an der Grenzfläche 7.

Sowohl die Bohrung 15 als auch der Kanal 18 sind mit dem Material der Dichtlippe 3 aufgefüllt. Der innerhalb der Bohrung 15 aufgenommene Teil dieses Dichtlippenmaterials bildet einen formschlüssig in den Träger 2 eingreifenden Vorsprung der Dichtlippe 3, der nachfolgend als erster Haltevorsprung 19 bezeichnet ist. Der in dem Kanal 18 aufgenommene Teil des Dichtlippenmaterials bildet einen weiteren Vorsprung der Dichtlippe 3, der nachfolgend als zweiter Haltevorsprung 20 bezeichnet ist. Sowohl der erste Haltevorsprung 19 als auch der zweite Haltevorsprung 20 sind an der Grenzfläche 7 einstückig mit der Dichtlippe 3 verbunden. Der erste Haltevorsprung 19 und der zweite Haltevorsprung 20 gehen zudem innerhalb des Trägers 2 einstückig ineinander über. Der erste Haltevorsprung 19 und der zweite Haltevorsprung 20 bilden somit eine über die Dichtlippe 3 geschlossene Schlaufe 21, die einen zwischen der Bohrung 15 und dem Kanal 18 angeordneten Bereich des Trägermaterials umschlingt und die im Querschnitt durch die Längsrichtung 1 etwa die Form eines Kopfüber Auf dem horizontalen Abschnitt 9 der Grenzfläche 7 stehenden Buchstaben "V" hat. Jeder der Formschlusseingriffe 14 bildet somit eine geschlossene Materialverschlaufung, die nicht gelöst werden kann, ohne mindestens einen der Haltevorsprünge 19 und 20 von der Dichtlippe 3 abzureißen. Für einen guten Zusammenhalt der Dichtlippe 3 mit dem Träger 2 trägt zudem die konische Form der Bohrung 15 und die entsprechend konische Form des ersten Haltevorsprungs 19 bei, aufgrund dessen der Haltevorsprung 19 mit dem Träger 2 eine Hinterschneidung bildet.

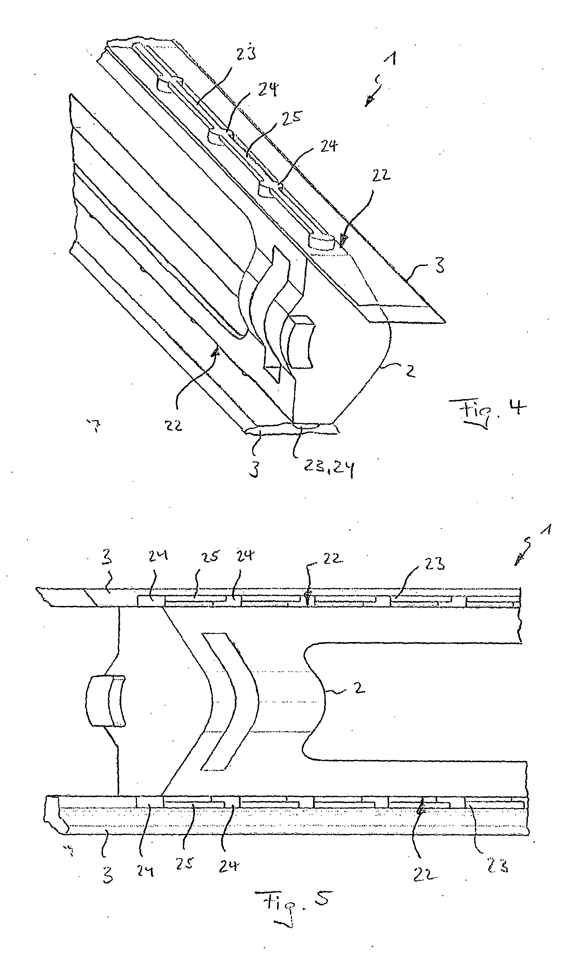

Die Fig. 4 und 5 zeigen eine weitere Ausführunsform der Längsdichtung 1. In dieser Ausführungsform sind zwei Dichtlippen 3 vorgesehen, die in Gegenüberstellung zueinander an dem gemeinsamen Träger 2 fixiert sind.

Zur Herstellung einer geschlossenen Materialverschlaufung ist an den Träger 2 an zwei einander gegenüberliegenden Schmalseiten 22, an die jeweils eine der Dichtlippen 3 anschließt, jeweils ein brückenartiger Vorsprung 23 angeformt. Jeder der Vorsprünge 23 wird aus einer Anzahl von entlang der Schmalseite 22 mit Abstand zueinander aufgereihten Säulen 24 gebildet, deren Freienden durch eine Längsstrebe 25 miteinander verbunden sind. Die Säulen 24 und die Längsstrebe 25 sind hierbei einstückiger Bestandteil des Trägers 2 und bestehen auch aus dem vergleichsweise harten Materialmaterial. Die Längsstrebe 25 verläuft dabei mit Abstand zu der zugehörigen Schmalseite 22 des Trägers 2, so dass je zwei benachbarte Säulen 24 zusammen mit dem diese verbindenen Abschnitt der Längsstrebe 25 eine geschlossene, einstückig mit dem Träger 2 zusammenhängende Schlaufe bilden.

Jeder Vorsprung 23 ist vollständig mit dem Material der zugehörigen Dichtlippe 3 umspritzt, so dass das Dichtungsmaterial der jeweiligen Dichtlippe 3 die durch die Säulen 24 und die Längsstrebe 25 des jeweiligen Vorsprungs 23 gebildeten Schlaufen geschlossen umschlingt.

### Bezugszeichenliste

- 1: Längsdichtung
- 2: Träger
- 3: Dichtlippe
- 4: Rastkontur
- 6: Vorderseite
- 7: Grenzfläche
- 8: (erster vertikaler) Abschnitt
- 9: (horizontaler) Abschnitt
- 10: (zweiter vertikaler) Abschnitt
- 11: Horizontalrichtung
- 12: Vertikalrichtung
- 13: Längsrichtung
- 14: Formschlusseingriff
- 15: Bohrung
- 16: Oberfläche
- 17: Öffnung
- 18: Kanal
- 19: (erster) Haltevorsprung
- 20: (erster) Haltevorsprung
- 21: Schlaufe
- 22: Schmalseite
- 23: Vorsprung
- 24: Säule
- 25: Längsstrebe

## Patentansprüche

1. Längsdichtung (1) für eine Linearführung, mit einem lang gestreckten Träger (2) aus einem vergleichsweise harten Kunststoff, und mit einer lang gestreckten Dichtlippe (3) aus einem vergleichsweise weichen Kunststoff, wobei die Dichtlippe (3) entlang einer Grenzfläche (7) an den Träger (2) derart angeformt ist, dass die Dichtlippe (3) und der Träger (2) durch mindestens eine geschlossene Materialverschlaufung (14) formschlüssig miteinander verbunden sind.

2. Längsdichtung (1) nach Anspruch 1
mit einer Mehrzahl von Materialverschlaufungen (14), die in Längsrichtung des Träger (2) und der Dichtlippe (3) regelmäßig zueinander beabstandet angeordnet sind.

3. Längsdichtung (1) nach Anspruch 1 oder 2,
wobei die Grenzfläche (7) im Querschnitt eine abgestufte Kontur aufweist, so dass zwischen dem Träger (2) und der Dichtlippe (3) ein Überlappungsbereich gebildet ist, in dem der Träger (2) und die Dichtlippe (3) überlappen.

4. Längsdichtung (1) nach einem der Ansprüche 1 bis 3,
wobei der Träger (2) im Bereich der Grenzfläche (7) mindestens eine Ausnehmung (15) aufweist, die sich ausgehend von der Grenzfläche (7) schwalbenschwanzartig aufweitet, und wobei in diese Ausnehmung (15) ein erster Haltevorsprung (9) der Dichtlippe (3) formschlüssig eingreift.

5. Längsdichtung (1) nach Anspruch 3 und 4,
wobei die oder jede Ausnehmung durch eine im Überlappungsbereich angeordnete konische Bohrung (15) gebildet ist, die sich ausgehend von der Grenzfläche (7) in Richtung auf eine freie Oberfläche (16) des Trägers (2) erstreckt.

6. Längsdichtung (1) nach Anspruch 5,
wobei die Ausnehmung (15) nach Art einer Durchgangsbohrung den Träger (2) vollständig durchsetzt.

7. Längsdichtung (1) nach Anspruch 4 oder 5,
wobei ein von der Grenzfläche (7) abgewandter Bereich der Ausnehmung (15) mit einem in den Träger (2) eingebrachten Kanal (18) verbunden ist, dessen anderes Ende mit Abstand zu der Ausnehmung (15) an der Grenzfläche (7) mündet, und wobei in diesen Kanal (18) ein zweiter Haltevorsprung (20) der Dichtlippe (3) eingreift, der endseitig mit dem ersten Haltevorsprung (19) zur Bildung einer Schlaufe (21) verbunden ist.

8. Längsdichtung (1) nach Anspruch 7,
wobei der Kanal (18) nach Art einer Nut zu einer freien Oberfläche (6,16) des Trägers (2) hin offen ist.

9. Längsdichtung (1) nach Anspruch 7 oder 8,
wobei die aus dem ersten Haltevorsprung (19) und dem zweiten Haltevorsprung (19) gebildete Schlaufe (21) im Querschnitt eine etwa V-förmige Kontur aufweist.

10. Längsdichtung (1) nach einem der Ansprüche 1 bis 9,
wobei der Träger (2) und die Dichtlippe (3) entlang der Grenzfläche (7) stoffschlüssig miteinander verbunden sind.

11. Längsdichtung (1) nach einem der Ansprüche 1 bis 10,
wobei der Träger (2) aus PA oder POM besteht.

12. Längsdichtung (1) nach einem der Ansprüche 1 bis 11,
wobei die Dichtlippe (3) aus einem thermoplastischen Elastomer besteht.

13. Längsdichtung (1) nach einem der Ansprüche 1 bis 12,
wobei die Dichtlippe (3) und der Träger (2) in einem Zweikomponenten-Spritzgussverfahren hergestellt sind.
